# EUROPÄISCHE PATENTSCHRIFT

(11) **EP 2 108 850 B1**
(45) Veröffentlichungstag und Bekanntmachung des Hinweises auf die Patenterteilung: **28.12.2011**
(21) Anmeldenummer: 09157460.8
(22) Anmeldetag: 07.04.2009
(51) Int. Cl.: A47C 19/02, F16B 12/48, F16B 12/22, F16B 12/54, A47C 19/00

(54) **Eckverbindung, insbesondere für metallfreie Bettgestelle**
Corner joint, in particular for metal-free bed frames
Liaison d'angle, notamment pour châssis de lit sans métal

(30) Priorität: 10.04.2008 DE 102008018692
(43) Veröffentlichungstag der Anmeldung: 14.10.2009
(73) Patentinhaber: Huhn, Heino, 99837 Dankmarshausen (DE)
(72) Erfinder: Huhn, Heino, 99837 Dankmarshausen (DE)
(74) Vertreter: Gulde Hengelhaupt Ziebig & Schneider

(56) Entgegenhaltungen:
- EP-A1- 1 835 184
- DE-A1- 3 619 868
- DE-U1- 9 208 007
- GB-A- 2 240 375

## Beschreibung

Die Erfindung betrifft die Eckverbindung eines Bettgestells, insbesondere metallfreien Bettgestells, mit den im Oberbegriff des Anspruchs 1 genannten Merkmalen.

Es ist bekannt, dass zumindest Komponenten von Möbeln, so auch Bettgestelle durch den Verbraucher selbst komplettiert werden. Dabei kommen immer wieder Dübel zur Anwendung, durch die die Einzelteile der Komponenten von Möbeln miteinander verbunden werden. Die Dübel verlaufen horizontal oder vertikal und haben in vielen Ausführungen lediglich eine Führungsfunktion. Das bedeutet, dass immer wieder zusätzliche Befestigungsmittel erforderlich sind, so dass sich eine aufwändige Endmontage ergibt.

Um bei der Komplettierung von Bettgestellen eine die Seitenwände bzw. den Seitenrahmen sowie die Stirnwände bzw. den Kopf/Fußrahmen verbindende Eckverbindung bereitzustellen, die eine einfache Montage ermöglicht und gleichzeitig hoch belastbar ist und bei dieser Belastung geräuschfrei bleibt sowie relativ kostengünstig ist und auch eine hohe Lebensdauer besitzt, ist beispielsweise nach der EP 1 835 184 A1 eine Eckverbindung für ein metallfreies Massivholzbett bekannt, bei der ebenfalls Dübel bei der Verbindung der Seitenwände sowie der Stirnwände des Bettgestells über den jeweiligen Bettpfosten zur Anwendung kommen. Dabei sind die Dübel innerhalb einer vertikal verlaufenden Aussparung des Bettpfostens angeordnet und befinden sich an den Seitenwänden der Aussparung. Um eine Verbindung der Seitenwände sowie der Stirnwände des Bettgestells über den jeweiligen Bettpfosten durch die Eckverbindung zu ermöglichen, besitzen sowohl die Seitenwände als auch die Stirnwände vertikal übereinander angeordnete Einstecköffnungen sowie in vertikaler Richtung verlaufende Führungsnute, in der Fachsprache auch als Gratnut bezeichnet, über die die Seitenwände und die Stirnwände auf die ebenfalls vertikal übereinander angeordneten Dübel innerhalb der vertikal verlaufenden Aussparung des Bettpfostens aufgesteckt werden.

Da ausgehend von dieser Anordnung sowohl der vertikal übereinander angeordneten Dübel als auch der vertikal übereinander angeordneten Einstecköffnungen mit ihren in vertikaler Richtung verlaufenden Führungsnuten ein Spiel zwischen den Seitenwänden und den Stirnwänden des Bettgestells unvermeidbar ist, erfordert diese bekannte Eckverbindung eine relativ aufwendige und damit kostenerhöhende Ausführung der Seitenwänden sowie der Stirnwände des Bettgestells. Das resultiert daraus, dass an der Stirnseite einer der beiden dem Bettpfosten zugeordneten Wände eine in seiner Breite der Stirnseite der anderen Wand entsprechende Ausfalzung vorgesehen ist, während an der Stirnseite der anderen Wand eine Nut eingearbeitet ist. Außerdem ist endseitig zu dieser Nut an der mit dieser versehenen Wand ein mit der Ausfälzung in Wirkverbindung tretender Sicherungszapfen erforderlich.

Es ist absolute Maßgenauigkeit erforderlich, was bei Holz, da Holz quillt und schwindet, fast unmöglich ist.

Somit ergibt sich eine Eckverbindung für ein metallfreies Massivholzbett, die nicht nur einen relativ hohen Arbeitsaufwand zu ihrer Herstellung erfordert und somit kostenungünstig ist, sondern bei der Montage des Bettgestells durch den Verbraucher immer wieder bestimmte Kenntnisse voraussetzt. Außerdem ist bei dieser Eckverbindung, insbesondere durch die Ausbildung der Seitenwände sowie der Stirnwände mit ihren Ausfälzungen, Nuten sowie Sicherungszapfen ein erhöhter Verschleiß nicht immer zu vermeiden. Bei Auf- und Abbau brechen die Sicherungszapfen häufig weg. Die Reihenfolge, welche Rahmenteile nacheinander eingehangen werden, ist zwingend einzuhalten - dies führt zu häufigen Rückfragen der Kunden bei Selbstmontage.

Diese Nachteile werden auch durch weiterhin bekannte Eckverbindungen, so beispielsweise durch die metallfreie Eckverbindung für Bettgestelle nach dem DE 297 01 033 U1 nicht vermieden, bei der am Bettpfosten eine schwalbenschwanzförmige Gratleiste mit einem darunter angeordneten Dübel vorgesehen ist und in den Stirnseiten der dem jeweiligen Bettpfosten zugeordneten Seitenteile entsprechend zugeordnete Nute zur Aufnahme der jeweiligen schwalbenschwanzförmigen Gratleiste sowie eine Aussparung zur Aufnahme des Dübels angeordnet sind.

Während diese metallfreien Eckverbindungen für Bettgestelle eine wiederholbare Demontage und eine sich anschließende Montage des Bettgestells zulassen, ist die Eckverbindung nach der GB 489,816, bei der an den Seitenteilen Zapfen derart mehrfach untereinander und versetzt zueinander angeordnet sind, dass diese über zwei im Fuß vertikal angeordnete Längsseiten miteinander in Eingriff gebracht und verleimt werden können und bei der die beiden zueinander winklig angeordneten Seitenteile zu den mittels eines in horizontalen Längsnuten der Seitenteile verleimten Eckriegels versteift werden, zusätzlich mit dem Nachteil behaftet, dass eine mehrfache Demontage, beispielsweise bei einem Bettgestell nicht möglich ist.

Die Druckschrift GB 2 240 375 A gibt eine Lösung zur Verbindung von Bauteilen an, bei der die Langlöcher in den Bauteilen im Winkel zur Vertikalen angeordnet sind, um eine axiale Verspannung bzw. ein Verklemmen der Bauteile zu erreichen.

Der Erfindung liegt die Aufgabe zugrunde, eine Eckverbindung, insbesondere für metallfreie Bettgestelle, entsprechend dem Oberbegriff von Anspruch 1 zu schaffen, durch die der zu ihrer Herstellung benötigte Arbeitsaufwand und die dabei entstehenden Kosten nicht nur weiter reduziert werden, sondern die auch die Voraussetzungen dafür schafft, dass der Verbraucher unaufwändig eine Montage des Bettgestells vornehmen kann, die bei Bedarf beliebig wiederholt werden kann, wobei gleichzeitig zu gewährleisten ist, dass die Eckverbindung mit ihren durch sie zu verbindenden Seitenwänden und Stirnwänden einen geringen Verschleiß unterliegt.

Die Lösung der Aufgabe erfolgt entsprechend den Merkmalen des Anspruchs 1. Die weiteren Ansprüche geben zweckmäßige Ausgestaltungen der erfindungsgemäßen Lösung wieder.

Dadurch, dass die Verankerungsstifte aus einem Kopf sowie aus einer halsförmigen Verjüngung bestehen sowie mit den Seitenwänden und den Stirnwänden oder mit dem jeweiligen Bettpfosten verbunden sind und dass über ihre halsförmige Verjüngung nach ihrem Eingreifen in die in dem Bettpfosten oder in den Seitenwänden und in den Stirnwänden vorgesehenen Bohrungen eine Verschiebung der Seitenwände sowie der Stirnwände in den den Bohrungen zugeordneten Langlöchern, die unter einem Winkel zur vertikal verlaufenden Achse des Bettpfostens angeordnet sind, der der Ausnehmung des Bettpfostens abgewandt ist, nach unten durch führbar ist, wird eine Eckverbindung, insbesondere für metallfreie Bettgestelle, bereit gestellt, die sich nicht nur durch ihre kostengünstige Herstellung auszeichnet, sondern die auch die Voraussetzungen dafür schafft, dass eine einfache Montage des Bettgestells, die beliebig wiederholt werden kann, ermöglicht wird. Außerdem liegen durch diese Eckverbindung die Voraussetzungen dafür vor, dass die Eckverbindung und die durch sie verbundenen Seitenwände und Stirnwände einem geringen Verschleiß ausgesetzt sind.

Erfindungsgemäß sind sowohl die Seitenwände als auch die Stirnwände an ihren Stirnseiten auf Gehrung geschnitten, so dass in der Endposition der Seitenwände sowie der Stirnwände nach ihrer Verschiebung über die den Bohrungen zugeordneten, unter einem Winkel angeordneten Langlöcher die Seitenwände sowie die Stirnwände kraftschlüssig miteinander verbunden sind, so dass die Voraussetzungen dafür vorliegen, dass bei Belastung der Eckverbindungen mit ihren zugehörigen Seitenwänden und Stirnwänden ein geräuschfrei bleibendes Bettgestell durch die Erfindung bereit gestellt wird.

Ein bedeutender Vorteil der Erfindung besteht darin, dass die Reihenfolge der verschiedenen Rahmenteile bei der Montage völlig egal ist.

Weitere bevorzugte Ausgestaltungen der Erfindung ergeben sich aus den übrigen, in den Unteransprüchen genannten Merkmalen.

Danach ist der Winkel, unter dem die Langlöcher zur vertikal verlaufenden Achse des Bettpfostens angeordnet sind, derart bemessen, dass in der Endposition der Seitenwände sowie der Stirnwände nach ihrer Verschiebung über die den Bohrungen zugeordneten, unter einem Winkel angeordneten Langlöcher die Seitenwände sowie die Stirnwände im Bereich ihrer Stirnseiten bündig miteinander in Verbindung stehen. Das führt zu einem stabilen Bettgestell.

Unterstützt werden die durch die erfindungsgemäße Ausbildung der Eckverbindung beabsichtigten Wirkungen weiterhin dadurch, dass jeder Seitenwand und jeder Stirnwand beziehungsweise jedem Bettpfosten zumindest zwei vorzugsweise jedoch vier übereinander angeordnete Verankerungsstifte sowie unter einem Winkel zur vertikal verlaufenden Achse des Bettpfostens angeordnete Langlöcher zugeordnet sind. Dabei ist der Kopf der Verankerungsstifte vorteilhaft kugelförmig ausgebildet, so dass eine leichte Einführung der Verankerungsstifte in die Bohrungen ermöglicht wird, während die halsförmige Verjüngung der Verankerungsstifte im Wesentlichen nach Art eines Zylinders oder Kegels ausgebildet ist.

Weiterhin sind bei der erfindungsgemäß ausgebildeten Eckverbindung die den Bohrungen zugeordneten, unter einem Winkel zur vertikal verlaufenden Achse des Bettpfostens angeordneten Langlöcher in ihrem unteren Bereich breiter ausgebildet als in ihrem oberen Bereich, derart, dass die Breite des unteren Bereiches dem Durchmesser des Kopfes der Verankerungsstifte unter Berücksichtigung ihrer Verschiebung in dem Langloch entspricht, während die Breite des oberen Bereiches dem Durchmesser der halsförmigen Verjüngung der Verankerungsstifte ebenfalls unter Berücksichtigung ihrer Verschiebung in dem Langloch entspricht.

Schließlich besitzen ausgehend von der Eckverbindung nach der Erfindung die Längswände und/oder die Stirnwände mit ihren Verankerungsstiften beziehungsweise Bohrungen und den diesen zugeordneten, unter einem Winkel zur vertikal verlaufenden Achse des Bettpfostens angeordneten Langlöchern an ihrer Innenseite Auflageleisten, die im Wesentlichen unter Bildung eines in eine Führungsnut innerhalb der Seitenwände und/oder Stirnwände eingreifenden, rechtwinkligen Steges schwalbenschwanzförmig ausgebildet sind, wobei der durch diese Ausbildung gebildete zweite Steg spitzwinklig ausgebildet ist, über dessen nach innen zugerichtete Seite die Auflageleisten an den Längswänden und/oder an den Stirnwänden abgestützt sind. Dabei ist die Höhe der unter Bildung eines rechteckförmigen Steges schwalbenschwanzförmig ausgebildeten Auflageleisten bei ihrer Verbindung mit den Seitenwänden und/oder Stirnwänden wählbar. Um dieses zu ermöglichen, sind an der Innenseite der Seitenwände sowie der Stirnwände zumindest zwei übereinander angeordnete Führungsnute vorgesehen.

Die Erfindung wird nachfolgend an Ausführungsbeispielen anhand der zugehörigen Zeichnungen erläutert. Es zeigen:
- Figur 1: eine perspektivische Darstellung einer Eck- verbindung mit einer dieser zugeordneten Seiten- wand,
- Figur 2: die Eckverbindung nach Figur 1 mit der dieser zugeordneten Seitenwand in einer veränderten Ausbildung,
- Figur 3: eine perspektivische Ansicht einer weiteren Variante einer Eckverbindung und
- Figur 4: eine perspektivische Teilansicht der Eckver- bindung nach Figur 1 und 3 zugeordneten Seiten- wand.

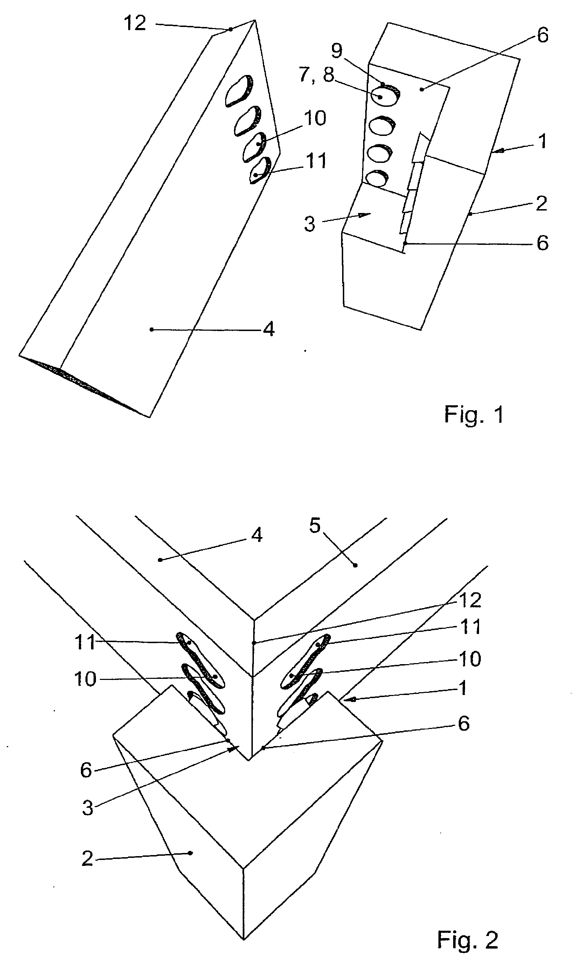

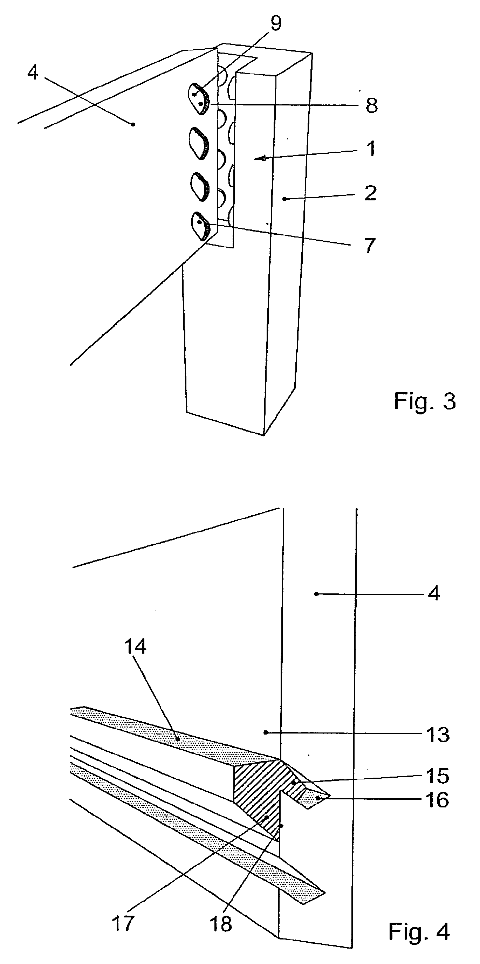

Figur 1 zeigt, dass die Eckverbindung 1 von einem Bettpfosten 2 eines metallfreien Bettgestells ausgeht, der eine innen liegende Ausnehmung 3 besitzt, die der Verbindung der Seitenwand 4 mit der Stirnwand 5 (Figur 2) des Bettgestells dient. Dabei besitzt die Ausnehmung 3 an ihren beiden Wänden 6 vier Verankerungsstifte 7, die übereinander angeordnet sind und aus einem kugelförmig ausgebildeten Kopf 8 und aus einer halsförmigen Verjüngung 9 - s.a. Figur 3 - bestehen. Die Aufnahme sowohl der Seitenwand 4 als auch der Stirnwand 5 durch die Verankerungsstifte 7 des Bettpfostens erfolgt über ebenfalls übereinander liegende Bohrungen 10, die in der dem Bettpfosten 2 zugerichteten Seite der Seitenwand 4 sowie der Stirnwand 5 vorgesehen sind, wobei den Bohrungen 10 jeweils ein Langloch 11 zugeordnet ist. Diese sind in einem Winkel zur vertikal verlaufenden Achse des Bettpfostens 2 angeordnet, der der Ausnehmung 3 des Bettpfostens 2 abgewandt und so bemessen ist, dass in der Endposition der Seitenwand 4 und somit auch der Stirnwand 5 nach ihrer Verschiebung auf den Verankerungsstiften 7 die Seitenwand 4 mit der Stirnwand 5 im Bereich ihrer Stirnseiten 12 bündig miteinander in Verbindung stehen.

Während, was nicht weiter dargestellt ist, die Langlöcher 11 in ihrem oberen Bereich eine Breite besitzen, die im Wesentlichen dem Durchmesser der halsförmigen Verjüngung 9 der Verankerungsstifte 7 entspricht, wird die Breite des unteren Bereiches der Langlöcher 11 im Wesentlichen durch den Durchmesser des kugelförmig ausgebildeten Kopfes der Verankerungsstifte 7 bestimmt, wobei es sich versteht, dass ein die Verschiebung gewährleistendes Spiel in die jeweilige Breite mit einfließt. Somit wird ermöglicht, dass bei der Verschiebung gleichzeitig eine sichere Verbindung zwischen dem Bettpfosten 2 und der Seitenwand 4 und somit auch der Stirnwand 5 besteht.

Die Eckverbindung 1 nach Figur 2 entspricht zwar der nach Figur 1, so dass auch hier die Seitenwand 4 und die in dieser Figur dargestellte Stirnwand 5 des Bettgestells übereinander liegende Bohrungen 10 und unter einem Winkel verlaufende, den Bohrungen 10 zugeordnete Langlöcher 11 besitzen und die beiden Wände 6 der Ausnehmung 3 des Bettpfostens 2 nicht weiter dargestellte Verankerungsstifte 7 besitzen, aber gegenüber der Ausbildung nach Figur 1 ist sowohl die Seitenwand 4 als auch die Stirnwand 5 an ihrer Stirnseite 12 auf Gehrung geschnitten, so dass nach der Verschiebung der Seitenwand 4 sowie der Stirnwand 5 auf den Verankerungsstiften 7 diese an ihren Stirnseiten 12 kraftschlüssig miteinander verbunden sind.

Aus Figur 3 geht hervor, dass gegenüber der Eckverbindung 1 nach Figur 1 und 2 die durch die Erfindung beabsichtigten Wirkungen auch dann erzielt werden, wenn die Seitenwand 4 und somit auch die nicht weiter dargestellte Stirnwand 5 des Bettgestells übereinander angeordnete, aus einer halsförmigen Verjüngung 9 und aus einem kugelförmig ausgebildeten Kopf 8 bestehende Verankerungsstifte 7 besitzt, die dann bei der Herstellung der kraftschlüssigen Verbindung durch die Eckverbindung 1 in aus dieser Figur ebenfalls nicht hervorgehende Bohrungen 10 mit ihren unter einem Winkel zur vertikal verlaufenden Achse des Bettpfostens 2 angeordneten Langlöchern 11 eingreifen. Die Ausbildung der Bohrungen 10 mit ihren unter einem Winkel zur vertikal verlaufenden Achse des Bettpfostens 2 angeordneten Langlöchern 11 entspricht dabei der Ausbildung der Eckverbindung nach Figur 1 und 2.

Wie Figur 4 zeigt, kann die Seitenwand 4 des Bettgestells unter Berücksichtigung der Eckverbindung 1 nach Figur 1, 2 und 3 und damit der Anordnung der Verankerungsstifte 7 und der Bohrungen 10 mit ihren unter einem Winkel zur vertikal verlaufenden Achse des Bettpfostens 2 angeordneten Langlöchern 11 weiterhin so ausgebildet sein, dass sie an ihrer Innenseite 13 eine Auflageleiste 14 besitzt, die unter Bildung eines rechteckförmigen Steges 15 schwalbenschwanzförmig ausgebildet ist. Während der Steg 15 in eine Führungsnut 16 der Seitenwand 4 eingreift, wird durch den durch die schwalbenschwanzförmige Ausbildung entstehenden, spitzwinklig ausgebildeten Steg 17 die Auflageleiste 14 über die nach innen zugerichtete Seite 18 des Steges 17 an der Seitenwand 4 abgestützt.

### Bezugszeichenliste

- 1: Eckverbindung
- 2: Bettpfosten
- 3: Ausnehmung
- 4: Seitenwand
- 5: Stirnwand
- 6: Wände
- 7: Verankerungsstifte
- 8: Kopf
- 9: halsförmige Verjüngung
- 10: Bohrungen
- 11: Langlöcher
- 12: Stirnseiten
- 13: Innenseiten
- 14: Auflageleiste
- 15: rechteckförmiger Steg
- 16: Führungsnut
- 17: spitzwinklig ausgebildeter Steg
- 18: Seite

## Patentansprüche

1. Eckverbindung eines aus Bettpfosten sowie mit diesen verbundenen Stirn- und Seitenteilen bestehenden Bettgestells, insbesondere metallfreien Bettgestells, die dem jeweiligen Bettpfosten (2) des Bettgestells zugeordnet ist, wobei jeder Bettpfosten (2) auf seiner nach oben zugerichteten Seite eine vertikal verlaufende, innen liegende Ausnehmung (3) besitzt, in der sowohl die Seitenwände (4) als auch die Stirnwände (5) des Bettgestells mit dem Bettpfosten (2) über Verankerungsstifte (7) fest verbunden sind, indem diese in Bohrungen (10) eingreifen, denen ein Langloch (11) zugeordnet ist, so dass durch Verschiebung in dem Langloch (11) eine Verbindung zwischen dem Bettpfosten (2) und der jeweiligen Seitenwand (4) sowie der Stirnwand (5) hergestellt ist, wobei
die Verankerungsstifte (7) aus einem Kopf (8) sowie aus einer halsförmigen Verjüngung (9) bestehen sowie mit den Seitenwänden (4) und den Stirnwänden (5) oder mit dem jeweiligen Bettpfosten (2) verbunden sind und dass über ihre halsförmige Verjüngung (9) nach ihrem Eingreifen in die in dem Bettpfosten (2) oder in den Seitenwänden (4) und in den Stirnwänden (5) vorgesehenen Bohrungen (10) eine Verschiebung der Seitenwände (4) sowie der Stirnwände (5) in den den Bohrungen (10) zugeordneten Langlöchern (11) nach unten durchführbar ist,
**dadurch gekennzeichnet, dass**
die Langlöcher unter einem Winkel zur vertikal verlaufenden Achse des Bettpfostens (2) angeordnet sind, der der Ausnehmung (3) des Bettpfostens (2) abgewandt ist, und dass sowohl die Seitenwände (4) als auch die Stirnwände (5) an ihren Stirnseiten (12) auf Gehrung geschnitten sind, so dass in der Endposition der Seitenwände (4) sowie der Stirnwände (5) nach ihrer Verschiebung über die den Bohrungen (10) zugeordneten, unter einem Winkel angeordneten Langlöcher (11) die Seitenwände (4) sowie die Stirnwände (5) kraftschlüssig miteinander verbunden sind.

2. Eckverbindung nach Anspruch 1,
**dadurch gekennzeichnet, dass**
jeder Seitenwand (4) und jeder Stirnwand (5) beziehungsweise jedem Bettpfosten (2) zumindest zwei vorzugsweise jedoch vier übereinander angeordnete Verankerungsstifte (7) sowie unter einem Winkel zur vertikal verlaufenden Achse des Bettpfostens (2) angeordnete Langlöcher (11) zugeordnet sind.

3. Eckverbindung nach Anspruch 2,
**dadurch gekennzeichnet, dass**
der Kopf (8) der Verankerungsstifte (7) kugelförmig ausgebildet ist, während die halsförmige Verjüngung (9) im Wesentlichen nach Art eines Zylinders ausgebildet ist.

4. Eckverbindung nach Anspruch 2,
**dadurch gekennzeichnet, dass**
die den Bohrungen (10) zugeordneten, unter einem Winkel zur vertikal verlaufenden Achse des Bettpfostens (2) angeordneten Langlöcher (11) in ihrem unteren Bereich breiter ausgebildet sind als in ihrem oberen Bereich derart, dass die Breite des unteren Bereiches dem Durchmesser des Kopfes (8) der Verankerungsstifte (7) unter Berücksichtigung ihrer Verschiebung in den Langlöchern (11) entspricht, während die Breite des oberen Bereiches dem Durchmesser der halsförmigen Verjüngung (9) der Verankerungsstifte (7) ebenfalls unter Berücksichtigung ihrer Verschiebung in den Langlöchern (11) entspricht.

5. Eckverbindung nach einem der vorangegangenen Ansprüche,
**dadurch gekennzeichnet, dass**
die Seitenwände (4) und/oder die Stirnwände (5) mit ihren Verankerungsstiften (7) beziehungsweise Bohrungen (10) und den diesen zugeordneten, unter einem Winkel zur vertikal verlaufenden Achse des Bettpfostens (2) angeordneten Langlöchern (11) an ihrer Innenseite (13) Auflageleisten (14) besitzen, die im Wesentlichen unter Bildung eines in eine Führungsnut (16) innerhalb der Seitenwände (4) und/oder der Stirnwände (5) eingreifenden, rechteckförmigen Steges (15) schwalbenschwanzförmig ausgebildet sind, wobei der durch diese Ausbildung gebildete zweite Steg (17) spitzwinklig ausgebildet ist, über dessen nach innen zugerichteten Seite (18) die Auflageleisten (14) an den Seitenwänden (4) und/oder an den Stirnwänden (5) abgestützt sind.

6. Eckverbindung nach Anspruch 5,
**dadurch gekennzeichnet, dass**
die Höhe der unter Bildung eines rechteckförmigen Steges (15) schwalbenschwanzförmig ausgebildeten Auflageleisten (14) bei ihrer Verbindung mit den Seitenwänden (4) und/oder Stirnwänden (5) wählbar ist.

7. Eckverbindung nach Anspruch 6,
**dadurch gekennzeichnet, dass**
an der Innenseite (13) der Seitenwände (4) sowie der Stirnwände (5) zumindest zwei übereinander angeordnete Führungsnute (16) vorgesehen sind.

## Claims

1. A corner joint of a bed frame, in particular metal-free bed frame, consisting of bedposts and front and side parts connected to said bedposts, the corner joint being assigned to the respective bedpost (2) of the bed frame, wherein each bedpost (2), on its upwardly facing side, has a vertically extending inner recess (3) in which the side walls (4) and also the front walls (5) of the bed frame are fixedly connected to the bedpost (2) via anchoring pins (7) in that the latter engage in boreholes (10) to which a slotted hole (11) is assigned so that by a displacement in the slotted hole (11), a connection between the bedpost (2) and the respective side wall (4) and the front wall (5) is established, wherein
the anchoring pins (7) consist of a head (8) and a neck-shaped tapering (9) and are connected to the side walls (4) and the front walls (5) or to the respective bedpost (2) and that via their neck-shaped tapering (9), after their engagement in the boreholes (10) provided in the bedpost (2) or in the side walls (4) and the front walls (5), a downward displacement of the side walls (4) and the front walls (5) in the boreholes (10) assigned to the slotted holes (11) can be carried out,
**characterized in that**
the slotted holes are arranged at an angle to the vertically extending axis of the bedpost (2) which faces away from the recess (3) of the bedpost (2), and that the side walls (4) and also the front walls (5) are mitered on their front sides (12) so that in the end position of the side walls (4) and the front walls (5), after their displacement via the slotted holes (11) assigned to the boreholes (10) and arranged at an angle, the side walls (4) and the front walls (5) are connected to each other in a force-fitting manner.

2. The corner joint according to claim 1,
**characterized in that**
to each side wall (4) and to each front wall (5) or each bedpost (2) at least two, but preferably four anchoring pins (7) arranged one above the other and also slotted holes (11) arranged at an angle to the vertically extending axis of the bedpost (2) are assigned.

3. The corner joint according to claim 2,
**characterized in that**
the head (8) of the anchoring pins (7) is formed ball-shaped while the neck-shaped tapering (9) is substantially formed in the manner of a cylinder.

4. The corner joint according to claim 2,
**characterized in that**
the slotted holes (11) assigned to the boreholes (10) and arranged at an angle to the vertically extending axis of the bedpost (2) are formed wider in their lower region than in their upper region, that the width of the lower region corresponds to the diameter of the head (8) of the anchoring pins (7) in consideration of their displacement in the slotted holes (11), while the width of the upper region corresponds to the diameter of the neck-shaped tapering (9) of the anchoring pins (7), likewise in consideration of their displacement in the slotted holes (11).

5. The corner joint according to any one of the preceding claims,
**characterized in that**
the side walls (4) and/or the front walls (5) with their anchoring pins (7) and boreholes (10), respectively, and the slotted holes (11) assigned thereto and arranged at an angle to the vertically extending axis of the bedpost (2), have support ledges (14) on their inner side (13) which are substantially configured in a dovetail-shaped manner thereby forming a rectangular web (15) engaging in a guide groove (16) within the side walls (4) and/or the front walls (5), wherein the second web (17) formed by this formation is formed in an acute-angled manner and wherein via the second web's inwardly facing side (18), the support ledges (14) are supported on the side walls (4) and/or the front walls (5).

6. The corner joint according to claim 5,
**characterized in that**
the height of the dovetail-shaped support ledges (14) formed by forming a rectangular web (15) can be selected when connecting said support ledges to the side walls (4) and/or the front walls (5).

7. The corner joint according to claim 6,
**characterized in that**
on the inner side (13) of the side walls (4) and front walls (5) at least two guide grooves (16) are provided which are arranged one above the each other.

## Revendications

1. Assemblage d'angle d'un cadre de lit, constitué de montants de lit et de parties frontales et latérales reliées à ces derniers, notamment d'un cadre de lit sans métal, qui est associé au montant de lit (2) respectif du cadre de lit, sur sa face dirigée vers le haut, le montant de lit (2) comportant un évidement (3) interne s'étendant à la verticale, dans lequel aussi bien les parois latérales (4) que les parois frontales (5) du cadre de lit sont reliées au montant de lit (2) par l'intermédiaire de goujons d'ancrage (7), en ce que ces derniers s'engagent dans des perçages (10) auxquels est associé un trou oblong (11) de sorte que par déplacement dans le trou oblong (11), un assemblage soit créé entre le montant de lit (2) et la paroi latérale (4) respective, ainsi que la paroi frontale (5),
les goujons d'ancrage (7) étant constitués d'une tête (8) ainsi que d'un rétrécissement (9) en forme de col et étant reliés aux parois latérales (4) et aux parois frontales (5) ou avec le montant de lit (2) respectif et par l'intermédiaire de leur rétrécissement (9) en forme de col, après leur engagement dans les perçages (10) prévus dans le montant du lit (2) ou dans les parois latérales (4) et dans les parois frontales (5), un déplacement vers le bas des parois latérales (4) ainsi que des parois frontales (5) dans les trous oblongs (11) associés aux perçages (10) étant réalisable,
**caractérisé en ce que**,
les trous oblongs sont placés sous un angle par rapport à l'axe s'étendant à la verticale du montant de lit (2), qui est opposé à l'évidement (3) du montant de lit (2) et **en ce qu'**aussi bien les parois latérales (4) que les parois frontales (5) sont coupées en onglet sur leurs faces frontales (12), de sorte que dans la position finale des parois latérales (4) ainsi que des parois frontales (5) après leur déplacement par l'intermédiaire des trous oblongs (11) associés aux perçages (10), placés sous un angle, les parois latérales (4) ainsi que les parois frontales (5) soient reliées entre elles par complémentarité de force.

2. Assemblage d'angle selon la revendication 1,
**caractérisé en ce qu'**
à chaque paroi latérale (4) et à chaque paroi frontale (5), respectivement à chaque montant de lit (2) sont associés deux, toutefois de préférence quatre goujons d'ancrage (7) superposés et trous oblongs (11) placés sous un angle par rapport à l'axe s'étendant à la verticale du montant de lit (2).

3. Assemblage d'angle selon la revendication 2,
**caractérisé en ce que**
la tête (8) des goujons d'ancrage (7) est conçue en forme de sphère, alors que le rétrécissement (9) en forme de col est sensiblement conçu à la manière d'un cylindre.

4. Assemblage d'angle selon la revendication 2,
**caractérisé en ce que**
les trous oblongs (11) associés aux perçages (10) placés sous un angle par rapport à l'axe s'étendant à la verticale du montant de lit (2) sont conçus en étant plus larges dans leur zone inférieure que dans leur zone supérieure, de sorte que la largeur de la zone inférieure corresponde au diamètre de la tête (8) des goujons d'ancrage (7) sous considération de leur déplacement dans les trous oblongs (11), alors que la largeur de la zone supérieure correspond au diamètre du rétrécissement (9) en forme de col des goujons d'ancrage (7) également sous considération de leur déplacement dans les trous oblongs (11).

5. Assemblage d'angle selon l'une quelconque des revendications précédentes,
**caractérisé en ce que**
les parois latérales (4) et/ou les parois frontales (5) avec leurs goujons d'ancrage (7) respectivement perçages (10) et les trous oblongs (11) associés à ces derniers, placés sous un angle par rapport à l'axe s'étendant à la verticale du montant de lit (2) comportent sur leur face intérieure (13) des baguettes d'appui (14) qui en formant sensiblement une entretoise (15) rectangulaire s'engageant dans une rainure de guidage (16) à l'intérieur des parois latérales (4) et/ou des parois frontales (5) sont conçues en forme de queues d'arondes, la deuxième entretoise (17) formée par cette configuration étant conçue à angle aigu, sur la face (18) dirigée vers l'intérieur de laquelle les baguettes d'appui (14) sont supportées sur les parois latérales (4) et/ou sur les parois frontales (5).

6. Assemblage d'angle selon la revendication 5,
**caractérisé en ce que**
la hauteur des baguettes d'appui (14) formées en queue d'aronde en formant une entretoise (15) rectangulaire est sélectionnable lors de leur liaison avec les parois latérales (4) et/ou les parois frontales (5).

7. Assemblage d'angle selon la revendication 6,
**caractérisé en ce que**
sur la face intérieure (13) des parois latérales (4) et des parois frontales (5) sont prévues au moins deux rainures de guidage (16) superposées.
